Europäisches Patentamt

European Patent Office

Office européen des brevets

(19)

(11) Publication number: **0 135 004**

**B1**

(12) EUROPEAN PATENT SPECIFICATION

(45) Date of publication of patent specification: **29.06.88**

(51) Int. Cl.⁴: **A 01 C 11/02**

(21) Application number: **84108141.7**

(22) Date of filing: **11.07.84**

(54) Transplantor provided with seedlings selector.

(30) Priority: **29.07.83 JP 117319/83 u**

(43) Date of publication of application:
**27.03.85 Bulletin 85/13**

(45) Publication of the grant of the patent:
**29.06.88 Bulletin 88/26**

(84) Designated Contracting States:
**BE DE FR GB NL**

(56) References cited:
**DE-A-2 709 110**
**DE-C- 847 509**
**GB-A-2 114 413**
**US-A-4 289 080**

(73) Proprietor: **CIRCLE IRON WORK CO., LTD.**
**3-12, Saiwaicho 3-chome**
**Takikawa Hokkaido (JP)**

(72) Inventor: **Mikawa, Isao**
**6-1, Ohmachi 6-chome Takikawa**
**Hokkaido (JP)**
Inventor: **Endoh, Masahiro**
**4-36, Ohgimachi 1-chome Takikawa**
**Hokkaido (JP)**
Inventor: **Kaji, Masayuki**
**15-2, Takinokawa-cho Higashi 2-chome**
**Takikawa Hokkaido (JP)**
Inventor: **Kishida, Yoshitaka**
**10-1-205, Sorachi-cho 3-chome**
**Takikawa Hokkaido (JP)**
Inventor: **Yamamoto, Nobuhiro**
**13-2, Takinokawa-cho Higashi 2-chome**
**Takikawa Hokkaido (JP)**

(74) Representative: **Patentanwälte Grünecker, Dr.**
**Kinkeldey, Dr. Stockmair, Dr. Schumann, Jakob,**
**Dr. Bezold, Meister, Hilgers, Dr. Meyer-Plath**
**Maximilianstrasse 58**
**D-8000 München 22 (DE)**

EP 0 135 004 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to a transplanter for seedlings grown in connected paper tubes according to the preamble part of claim 1.

Seedlings grown in paper tubes have been widely used for planting in fields. Such seedlings in paper tubes are prepared by filling soil into each individual tube which are arranged in a honeycomb-like configuration, and by seeding seeds into said soil and growing same by means of a hot bed or cold bed. However, the seeds do not always germinate and sometimes, the leaves show defects which occur due to disease or damage caused by insects resulting in a certain number of inferior seedlings. If such inferior seedlings are planted, misplanting and delayed growth is effected resulting in a decreased yield.

Therefore, as a commonly used method, seedlings grown in paper tubes have been separated by hand into individual tubes wherein inferior seedlings have been removed before planting. In another known method, seedlings are placed by an operator in order on the conveyor of a transplanter from which inferior ones are removed by hand. These known methods, however, suffer from the drawback that they are extremely troublesome, time-consuming and labour-intensive resulting in the operator's early fatigue and a decreased efficiency of the transplanter because of the necessity of a manual handling.

A transplanter for seedlings grown in connected paper tubes according to the preamble part of claim 1 is known from US—A—4 289 080. This known transplanter for the mechanical transplating of seedlings into grow blocks formed into easily handled modules, however, involves a first problem in that it depends on the probability that the detection of two non-germinated seeds in a consecutive liner sequence is much lower than the percentage of non-germinated seeds within a pattern of randomly distributed seeds. Moreover, the known transplanter suffers from the drawback that either too many or too few selected seedlings are accumulated on the transferring conveyor since it is not possible to control the supplying conveyor in accordance with the amount of selected seedlings accumulated on the transferring conveyor resulting in an unduly increased or decreased supply of seedlings to the planting means which, in turn, results in misplanting and an undesired variation in the planting intervals.

It is therefore an object underlying the present invention to provide a transplanter for seedlings grown in connected paper tubes according to the preamble part of claim 1 which is able to obviate the beforementioned drawbacks of the known transplanter.

With a generic transplanter, the solution of this object is achieved by the characterizing features of claim 1.

The dependent claims contain advantageous embodiments of the present invention.

The features and advantages of the transplanter of the present invention will become even more apparent from the following description taken in conjunction with the accompanying drawings in which:

Fig. 1 is a side view of a transplanter according to the present invention,

Fig. 2 is a sectional view taken along line A—A in Fig. 3, and

Fig. 3 is a plan view of the part of the transplanter of the present invention shown in Fig. 2.

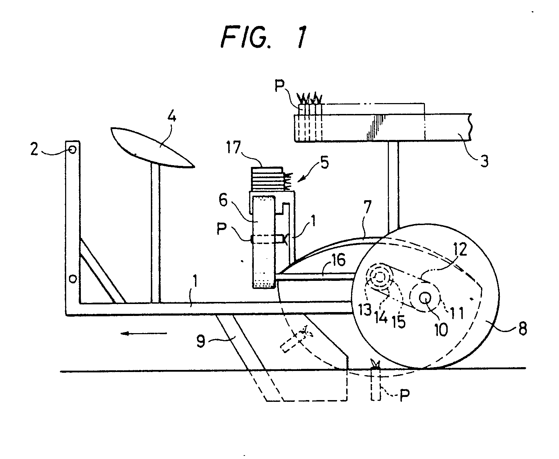

Referring now to Fig. 1, there is a transplanter shown having a frame 1 which is provided at the front end with a hole 2 for connecting the transplanter to a tractor which moves the transplanter in the direction shown by the arrow in Fig. 1. A table 3 is positioned above the frame 1 and adapted to carry seedlings P grown in paper tubes. The bottomless paper tubes with seedlings P are adhered to each other by a water-soluble paste in a honeycomb-like manner and can easily be separated from each other by watering before loading on the table 3. Though paper tube seedlings may vary in germination ratio depending on the kind of plant, usually approximately 90% of beet seedlings contain at random approximately 10% of inferior seedlings.

As can also be seen from Fig. 1, a seat 4 and a seedling selector device 5 are disposed in front of the table 3.

An operator sitting on seat 4 can take the separated and lined-up paper tube seedlings from the table 3 whilst keeping the roots thereof ahead on the belt of the seedling selector device 5 and can transfer the superior seedlings crosswise whilst removing the inferior ones.

At the transfer edge of the seedling selector device 5, there is a transferring conveyor 6 provided which comprises a pair of belts rotating continuously. At the other end portion of the transferring conveyor 6, a planting means is disposed which consists of a pair of rotary planting discs 7 rotating in the direction in which the machine moves, a press disc 8 disposed rearward of the rotary planting discs 7 and an opening plough 9 opened backwards and provided below the frame 1 and in front of the rotary planting discs 7. When the head of the paper tube seedlings P is transferred by the transferring conveyor 6, the pair of rotary planting discs 7 accepts the head of the seedlings and runs downwards to release the seedlings for planting. The plough 9 is adjusted such that it makes the rotary planting discs 7 rotate to release the paper tube seedlings P in the open furrow which are suppressed thereafter by the press disc 8.

The beforementioned elements of the transplanter are respectively driven by means of the rotation of the press disc 8. As can be seen from Fig. 1, a sprocket wheel 11 is fixed to a shaft 10 of the press disc 8 and rotates another sprocket wheel 14 secured to a shaft 13 of the rotary planting disc 7 by means of a chain 12. A bevel gear 15 is mounted on the shaft 13 and rotates a countershaft 16 to drive the seedling selector device 5 and the transferring conveyor 6.

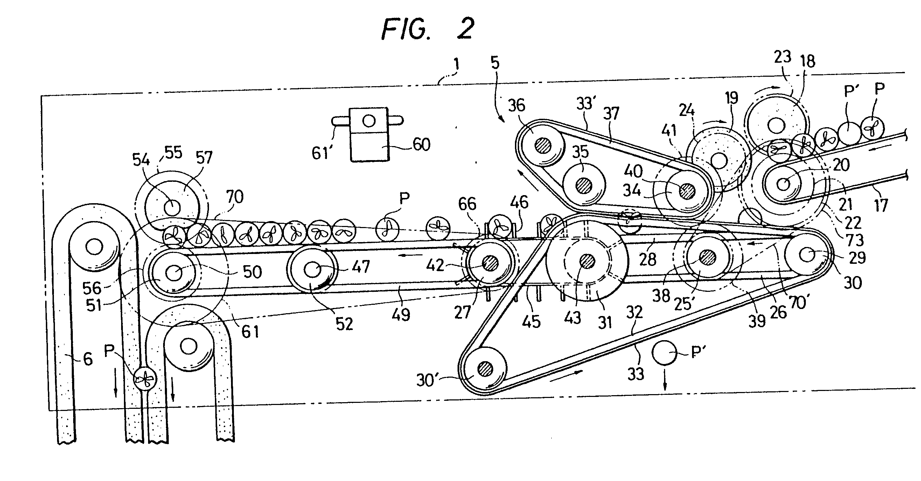

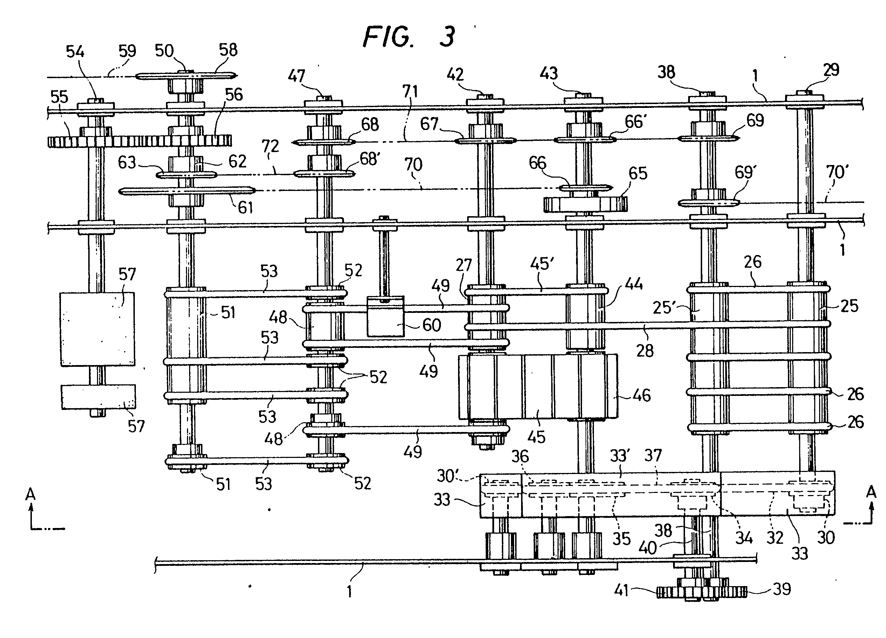

In Figs. 2 and 3, the seedling selector device 5 is described in detail.

The operator places the paper tube seedlings P on a supplying conveyor 17 with the seedlings P being lined up and in contact with each other. The supplying conveyor 17 is a flat belt and rotates in the direction shown by the arrow in Fig. 2. Above the end portion of the supplying conveyor 17, there is a spongy press wheel 18 provided which is disposed at a sufficient distance to hold the paper tube seedlings P such that the seedlings P are propelled out whilst being pressed. A spongy separator 19 is disposed in front of the spongy ·press wheel 18 and is rapidly rotated to separate the row of seedlings P into single seedlings P. The rotation is effected by gear wheels 21, 22 which are different in diameter and fixed to a pulley shaft 20 of the supplying conveyor 17 and said wheels 21, 22 mesh with gear wheels 23, 24 which are mounted on the spongy press wheel 18 and the spongy separator 19, respectively, such that they rotate in the direction shown by the arrow in Fig. 2.

The seedling selector device 5 is disposed below the end portion of the supplying conveyor 17 and is composed, as an indispensable unit, of a conveyor capable of rotating faster than the supplying conveyor 17 and holding individual paper tube seedlings P separated by the spongy separator 19 and widening the distance to remove the inferior seedlings, and a conveyor capable of rotating slower than the above-mentioned supplying conveyor 17 such that selected seedlings P may be supplied in a closely standing row to the transferring conveyor 6.

For widening the distance between seedlings P, a pair of pulleys 25, 25' is provided below the separator 19 with selector belts 26 being rotated quickly by said pulleys 25, 25'. The selector belts 26 are adapted to receive dropped seedlings P. The seedling selector belts 26 are usually string-like belts which rotate in the direction shown by the arrow with a linear velocity of about 2 to 4 times as fast as the supplying conveyor 17.

A cylindrical pulley 27 is disposed behind said pulley 25' and a supporting belt 28 is belted between said pulleys 25', 27 to receive paper tube seedlings P from below. This supporting belt 28 rotates at the same speed as the seedling selector belts 26.

A further pulley 30 is fixed to the lower end of a shaft 29 of the pulley 25 and a further pulley 30' is disposed below the pulley 27 with a counter pulley 31 being provided between said pulley 27 and said pulley 25'. The pulleys 30, 30' and the counter pulley 31 are triangularly belted with a leaf supporting belt 32 with the counter pulley 31 being of a larger size und being a freely rotating pulley such as pulley 30'.

The leaf supporting belt 32 is a string-like belt, the outside of which is fixed to a wide belt 33 such that it may protect the leaves from slipping and being pulled into the pulleys. The leaves are held by the wide belt 33 and a further wide belt 33' which is positioned above and opposite to said wide belt 33.

Three further pulleys 34, 35, 36 are placed in a triangular arrangement above the wide belt 33 and a string-like belt 37 is wound around these pulleys 34, 35, 36. The wide belt 33' is fixed to the outside of said string-like belt 37.

A gear 39 is fixed to the end of a shaft 38 of the pulley 25' and a further gear 41 is fixed to a shaft 40 of the pulley 34. These gears 39, 41 mesh with each other to produce a driving force while pulleys 35, 36 are freely rotating pulleys. The wide belts 33, 33' are made to rotate at the same velocity but in a reverse direction relative to each other. Therefore, paper tube seedlings P fallen onto the seedling selector belts 26 are held whilst keeping their roots on the supporting belt 28 and their leaves on the wide belt 33. When the seedling selector belts 26 rotate in the direction shown by the arrow in Fig. 2, the leaves of the seedlings are captured at the end of the belts 26 between the wide belts 33, 33' because of the rotation of the wide belt 33, and are transferred. When the paper tube seedlings P move further ahead, they are transferred while raising their head upwards because of the larger diameter of the intermediate counter pulley 31 and the paper tube seedlings P may thus be transferred almost horizontally without lowering the head of the paper tube seedlings P.

Inferior seedlings P', the leaves of which are deficient or immature, fail to be captured and only their lower roots are held by the supporting belt 28. These inferior seedlings fall from the end of the seedling selector belts 26 because they are unbalanced due to the extremely narrow supporting belt 28. The paper tube seedlings P separated from inferior seedlings P' and only consisting of superior seedlings P, are transferred to a pair of seedling arraying belts 54, 54' which are wound around the pulley 27 and a further pulley 44 fixed to a shaft 43 positioned between the shaft 38 of the pulley 25' and a shaft 42 of the pulley 27. The arraying belts 54, 54' rotate at the same speed as the supporting belt 28. The string-like arraying belt 45' supports the lower roots of the seedlings P and the wide arraying belt 54 is capable of supporting the middle of the paper tube seedlings P. The wide arraying belt 54 has many wings 46 parallel to the shaft 43 and being disposed at intervals which are sufficiently wide for one seedling. P. Therefore, when the seedlings P are transferred to the belts 28, 33, 33' toward the seedling arraying belt 54, they are scooped with the wings 46 rotating from below upwards to be captured between the wings 46. Consequently, the seedlings P are correctly positioned crosswise on the arraying belt 54 and are released from their positioning between the wide belts 33, 33' in which their leaves have been held.

The seedlings P standing in line on the arraying belts 54, 54' move onto string-like belts 49 which are belted between the pulley 27 and two pulleys 48 which are fixed on a shaft 47 which is disposed behind and parallel to said shaft 42. As the two belts 49 are on the same level and rotate at the same speed as the belts 28 and 45, the seedlings P can be transferred at the same speed as on the supporting belt 28. A driving shaft 50 is disposed behind the shaft 47 and a sprocket wheel 58 is fixed to one end of said shaft 50 and is connected to the counter shaft 16 by means of a chain 59. A further cylindrical pulley 51 is fixed to the driving shaft 50 and the shaft 47 comprises two freely rotating pulleys 52 with accumulating belts 53 being wound around said pulleys 51 and 52 such that the rotation may be effected by said pulley 51. The belts 53 are adjusted to usually rotate slower than the supplying conveyor 17 and to have a linear velocity of approximately 1/2 to 1/4 of the velocity of the belts 28 and 49.

The velocity ratio between the belts is determined mainly from the yield of seedlings (superior seedlings content (%)). For example, if the normal velocity of the accumulation belt 53 is 1.0, the velocity of the belts 49, 45, 28 and 26 should be approximately 3.0 and the velocity of the supplying conveyor should be approximately 1.2. Therefore, the transfer of the seedlings P becomes slower on the belts 53 and consequently, the paper tube seedlings P on the belts 53 progress by being pushed by the subsequent paper tube seedlings on the strong-like belts 49. As a result, the paper tube seedlings P are in close contact with each other.

A shaft 54 is mounted above the transferring end of the accumulating belts 53 and is provided with a gear 55 which meshes with a gear 56 of the driving shaft 50 to rotate reversely with respect to each other. A press wheel 57 is provided on the surface of the shaft 54 and is covered with an elastic material such as sponge and rotates at the same speed as the accumulating belts 53.

A detector 60, preferably in the form of a photoelectric switch, is fixed to the frame 1 in the vicinity of the accumulating belts 53 and above the string-like belts 49. Preferably, a long hole 61' is provided on the frame 1 such that the attachment position of the detector 60 may be freely adjusted. The detector 60 may be replaced with non-contact detectors which are usually used as detectors of articles. Regardless of the type of detector used, a so-called "on delay system" is preferred wherein the detection is made ineffective during a certain period when the seedlings P pass under the interconnection with a timer. For example, for a paper tube seedling P having a diameter of 18 mm moving at a speed of 30.6 mm/sec on the string-like belts 49, the passing under the detector 60 requires 0.588 seconds and therefore, it is preferable to adjust the detection for less than 0.6 seconds to be ineffective.

Under conditions in which inferior seedlings P' have a uniform distribution in the seedlings grown in the honeycomb-like paper tubes and the yield of seedlings corresponds to the ratio of the speed between the supplying conveyor 17 and the accumulating belts 53, the variance of the number of seedlings on the accumulating belts 53 becomes small due to the fact that they are transferred from the supplying conveyor 17 leaving inferior seedlings P' at the end of the seedling selector belts 26, and even if the belt is made short, the variance is absorbed, thereby supplying the seedlings P from the press wheel 57 on the transferring conveyor 6 keeping their close contact for planting by the planting discs 7. On the contrary, if the inferior seedlings P' have an ununiform distribution, e.g. a succession of 3 to 5 inferior seedlings, the correctly grown seedlings P cannot be transferred continuously onto the accumulating belts 53 since such a supply would result in an interruption of the contact of the paper tube seedlings and consequently, a misplanting.

Consequently, according to the present invention, for beet seedlings of a yield of approximately 90%, the speed of the supplying conveyor 17 is adjusted to be 1.2 times faster such that a constant number of seedlings P may be kept on the accumulating belt 53. For this purpose, the detector 60 detects the accumulation of the seedlings on the string-like belts 49 and makes the belts 49, 28 and the supplying conveyor 17 rotate slower while the accumulating belt 53 is kept at a normal speed of rotation.

This arrangement is illustrated in detail in the drawings.

The driving shaft 50 is provided with a large sprocket wheel 61 and a small sprocket wheel 63 is provided with a ratchet 62. Under normal conditions, the large sprocket wheel 61 rotates a sprocket wheel 66 fixed to the shaft 43 and rapidly rotates said shaft 43 by means of an electromagnetic clutch 65. By means of the small sprocket wheel 63, the drive is adjusted to be as fast as the drive shaft 50 or a bit faster. A further sprocket wheel 66' is fixed to the shaft 43 and rotates at the same speed as a sprocket wheel 69 fixed to the shaft 38 and the sprocket wheel 67 fixed to the shaft 52, wherein the sprocket wheel 67 and the sprocket wheel 68 of the shaft 47 are connected to each other by means of a chain 71. A further sprocket wheel 68' is provided on said shaft 47 and is connected to said sprocket wheel 63 by means of a chain 72. A further sprocket wheel 69' is fixed to the shaft 38 and is connected to a sprocket wheel 73 of the shaft 20 by means of a chain 70' to effect a motion which enables the supplying conveyor 17 to rotate 1.2 times faster than the accumulating belt 53. The small sprocket wheel 63 rotates with the large sprocket wheel 61 but the wheel 63 is raced due to the provision of the ratchet 62.

In this mechanism, the successive transferring of only superior seedlings P from the supplying conveyor 17 increases the accumulation of seedlings P onto the accumulating belts 53 subsequent to their accumulation on the string-like belts 49 which the detector 60 detects with the electromagnetic clutch 65 being switched off. As a result, the drive of the large sprocket wheel is interrupted and the rotation of the shaft 43 decreases. When the rotation of the shaft 43 approaches the rotation of the driving shaft 50, the small sprocket wheel 63 is put in motion by the action of the ratchet 62. However, the small sprocket wheel is rotated at a lower speed and the speed of the belts 28, 49 is a bit faster than that of the accumulating belts 53 while the transferring speed of the supplying conveyor 17 is adjusted to be approximately 0.4 times than that of transferring speed of the accumulating belts 53. Consequently, the row of seedlings P is allowed to be transferred successively to be separated from the subsequent seedlings which the detector 60 detects and therefore, the electromagnetic clutch 65 is switched on to recover the rapid transfer.

Any type of transplanter may be affixed to the seedling selector device 5 according to the present invention. The supplying conveyor 17 is made faster than the yield of seedlings and therefore, even if there is a succession of 3 to 5 inferior seedlings P', the seedlings are kept in close contact on the accumulating belts 53 and are supplied in a stable condition onto the planting means. Therefore, a selection by hand as is necessary with conventional transplanters is not necessary and thus, planting at a high speed is possible avoiding undesirable intervals or disorder of the planted seedlings.

The transplanter according to the present invention is advantageous for several kinds of field seedlings. It can be applied to beet-, vegetable-, tobacco-seedlings and other general crops.

**Claims**

1. "A transplanter for seedlings (P) grown in connected paper tubes and, if grown correctly, having roots and leaves, comprising:

a supplying conveyor (17) for supplying said tubes containing said seedlings, and feeding said tubes to a separator (19) being disposed adjacent to said supplying conveyor (17) and being adapted to separate the connected paper tubes into single paper tubes; a seedling selector device (5) to sense those tubes which do not contain a correctly grown seedling, and a transferring conveyor (6) for transferring single tubes containing correctly grown seedlings to a planting means (7, 8, 9) characterised in that the seedling selector device (5) comprises a pair of seedling selector belts (26) being located below said separator (19) and adapted to receive the single paper tubes as they drop from said separator (19), a pair of wide belts (33, 33') being positioned opposite to one another and adjacent to the feeding end of said selector belts (26), and a supporting belt (28) narrower than the total width of said selector belts and receiving the paper tubes from said selector belts wherein said wide belts (33, 33') capture the leaves of seedlings (P) contained in said paper tubes transferred from said seedling selecting belts (26) to said supporting belt (28) while paper tubes not containing a seedling with leaves sufficient to be captured by said wide belts (33, 33') fall off said supporting belt (28); and in that there is provided a controlling means comprising string-like belts (49) receiving paper tubes and seedlings fed from said seedling selector device and rotating at a certain speed, a pair of accumulating belts (53) receiving paper tubes and seedlings fed from the string-like belts (49) and rotating at a constant speed normally slower than that of the string-like belts and accumulating said seedlings closely positioned side by side, and a detector (60) detecting an accumulation of paper tubes and seedlings (P) on said string-like belts (49), said controlling means causing the supplying conveyor (17) to rotate more slowly when the accumulation on said string-like belt occurs".

2. Transplanter according to claim 1, being characterised in that there is provided a pair of arraying belts (45, 45') being disposed between said supporting belt (28) and said string-like belts (49).

3. Transplanter according to claim 1 or claim 2, being characterised in that said detector (60) is a detector which is not in contact with the seedlings (P).

4. Transplanter according to one of claims 1 to 3, being characterised in that said seedling selector belts (26) co-rotate with said string-like belts (49) by means of an electromagnetic clutch (65) co-operating with said detector (60).

**Patentansprüche**

1. Pikiermaschine für Setzlinge (P), die in verbundenen Papierhülsen gewachsen sind und die, wenn sie richtig gewachsen sind, Wurzeln und Blätter haben, mit:

einem Zuführungsförderer (17) zur Zuführung der Hülsen, die die Setzlinge enthalten und Zuführung dieser Hülsen zu einem Separator (19), der benachbart zu dem Zuführungsförderer (17) angeordnet ist und vorgesehen ist, um die verbundenen Papierhülsen in einzelne Papierhülsen zu trennen; einer Setzlingsauswahlvorrichtung (5), um diejenigen Röhren zu erfassen, die keinen richtig gewachsenen Setzling enthalten, und einem übergabeförderer (6) zur Übergabe einzelner Röhren, die richtig gewachsene Setzlinge enthalten an eine Pflanzeinrichtung (7, 8, 9), dadurch gekennzeichnet, daß die Setzlingsauswahlvorrichtung (5) ein Paar Setzlingsauswahlbänder (26) aufweist, die unterhalb des Separators (19) angeordnet und vorgesehen sind, um die einzelnen Papierröhren aufzunehmen, wenn sie von dem Separator (19) herabfallen, ein Paar Breitbandriemen (33, 33') die einander gegenüberliegend und benachbart zu dem Zuförderende der Auswahlbänder (26) angeordnet sind, und ein Lagerungsband (28), das schmaler ist als die Gesamtbreite der Auswahlbänder und die Papierröhren von den Auswahlbändern aufnehmen, wobei die Breitbandriemen (33, 33') die Blätter der Setzlinge (P) einschließen, die in den Papierröhren enthalten sind, die von den Setzlingsauswahlbändern (26) an den Lagerungsriemen (28) übergeben werden, während Papierröhren, die keine Setzlinge mit Blättern ausreichend, um durch die Breitbandriemen (33, 33') eingeschlossen zu werden, enthalten, von dem Lagerungsband (28) herabfallen; und dadurch, daß eine Steuereinrichtung vorgesehen ist, mit kettenartigen Bändern (49), die Papierröhren und Setzlinge aufnehmen, die von der Setzlingsauswahlvorrichtung zugeführt sind und die mit einer bestimmten Geschwindigkeit umlaufen, einem Paar Sammelbänder (53), die die Papierröhren und Setzlinge zugeführt von den kettenartigen Bändern (49) aufnehmen und mit einer konstanten Geschwindigkeit umlaufen, die normalerweise niedriger ist als diejenige der kettenartigen Bänder und die die Setzlinge eng nebeneinanderliegend sammeln und einem Detektor (60), der eine Anhäufung von Papierröhren und Setzlingen (P) auf den kettenartigen Bändern (49) erfaßt, wobei die Steuereinrichtung den Zuführungsförderer (17) veranlaßt, langsamer umzulaufen, wenn die Anhäufung auf dem kettenartigen Riemen auftritt.

2. Pikiermaschine nach Anspruch 1, dadurch gekennzeichnet, daß ein Paar Unterteilungsförderbänder (45, 45') zwischen dem Lagerband (28) und den kettenartigen Bändern (49) angeordnet ist.

3. Pikiermaschine nach Anspruch 1 oder 2, dadurch gekennzeichnet, daß der Detektor (60) ein Detektor ist, der nicht mit den Setzlingen (P) in Berührung ist.

4. Pikiermaschine nach einem der Ansprüche 1 bis 3, dadurch gekennzeichnet, daß die Setzlingsauswahlbänder (26) gemeinsam mit den kettenartigen Bändern (49) durch eine Elektromagnetkupplung (65) umlaufen, die mit dem Detektor (60) zusammenwirkt.

**Revendications**

1. Repiqueuse pour jeunes plants (P) cultivés dans des tubes de papier reliés et, s'ils sont cultivés correctement, ayant des racines et des feuilles, comprenant:

un transporteur d'amenée (17) pour fournir lesdits tubes contenant lesdits jeunes plants, et introduire lesdits tubes dans un séparateur (19) disposé au voisinage dudit transporteur d'amenée (17) et adapté à séparer les tubes de papier reliés pour donner des tubes de papier isolés; un dispositif de sélection de jeunes plants (5) pour détecter les tubes qui ne contiennent pas de jeunes plants cultivés correctement, et un transporteur de transfert (6) pour transférer les tubes isolés contenant des jeunes plants correctement cultivés vers un moyen de repiquage (7, 8, 9), caractérisée en ce que le dispositif de sélection de jeunes plants (5) comprend une paire de courroies de sélection de jeunes plants (26) disposées sous ledit séparateur (19) et adaptées à recevoir lesdites tubes de papier isolés au fur et à mesure qu'ils tombent dudit séparateur (19), une paire de courroies larges (33, 33') disposées en face l'une de l'autre et au voisinage de ladite extrémité d'alimentation desdites courroies de sélection (26), et une courroie de support (28) plus étroite que la largeur totale desdites courroies de sélection et recevant les tubes de papier en provenance desdites courroies de sélection, lesdites courroies larges (33, 33') saisissant les feuilles des jeunes plants (P) contenues dans lesdits tubes de papier transférés par lesdites courroies de sélection de jeunes plants (26) vers ladite courroie de support (28), alors que les tubes de papier ne contenant pas un jeune plant ayant des feuilles suffisamment développées pour être saisies par lesdites courroies larges (33, 33') tombent de ladite courroie de support (28); et en ce qu'il est prévu un moyen de commande comprenant des courroies en forme de cordes (49) recevant des tubes de papier et des jeunes plants fournis par ledit dispositif de sélection de jeunes plants et tournant à une certaine vitesse, une paire de courroies d'accumulation (53) recevant des tubes de papier et des jeunes plants fournis par lesdites courroies en forme de cordes (49) et tournant à une vitesse constante normalement inférieure à celle des courroies en forme de cordes et accumulant lesdits jeunes plants étroitement espacés côte à côte, et un détecteur (60) détectant l'accumulation de tubes de papier et de jeunes plants (P) sur lesdites courroies en forme de cordes (49), ledit moyen de commande provoquant une rotation plus lente du transporteur d'amenée (17) lorsque l'accumulation sur ladite courroie en forme de corde se produit.

2. Repiqueuse selon la revendication 1, caractérisée en ce qu'il est prévu une paire de courroies d'arrangement (45, 45') disposées entre ladite courroie de support (28) et lesdites courroies en forme de cordes (49).

3. Repiqueuse selon la revendication 1 ou 2, caractérisée en ce que ledit détecteur (60) est un détecteur qui n'est pas en contact avec les jeunes plants (P).

4. Repiqueuse selon l'une des revendications 1 à 3, caractérisée en ce que lesdites courroies de sélection de jeunes plants (26) tournent en même temps que lesdites courroies en forme de cordes (49) au moyen d'un embrayage électromagnétique (65) coopérant avec ledit détecteur.

## FIG. 1

FIG. 2

FIG. 3